# FASCICULE DE BREVET EUROPEEN

(11) **EP 1 405 138 B1**
(45) Date de publication et mention de la délivrance du brevet: **24.08.2005**
(21) Numéro de dépôt: 02740852.5
(22) Date de dépôt: 04.06.2002
(51) Int. Cl.: G03B 21/62

(54) **ECRAN DE RETROPROJECTION**
RÜCKPROJEKTIONSSCHIRM
BACK-PROJECTION SCREEN

(30) Priorité: 13.06.2001 FR 0107708
(43) Date de publication de la demande: 07.04.2004
(73) Titulaire: Thomson Licensing S.A., 92100 Boulogne-Billancourt (FR)
(72) Inventeur: HAAS, Gunther, F-35760 St Grégoire (FR)
(74) Mandataire: Browaeys, Jean-Philippe
(86) Numéro de dépôt international: PCT/FR2002/001871
(87) Numéro de publication internationale: WO 2002/101460

(56) Documents cités:
- EP-A- 1 039 337
- US-A- 4 003 080
- US-A- 4 531 812

## Description

L'invention concerne les écrans de rétroprojection d'images du type de ceux qui sont utilisés dans les rétroprojecteurs de télévision (« TV back-projectors » en langue anglaise).

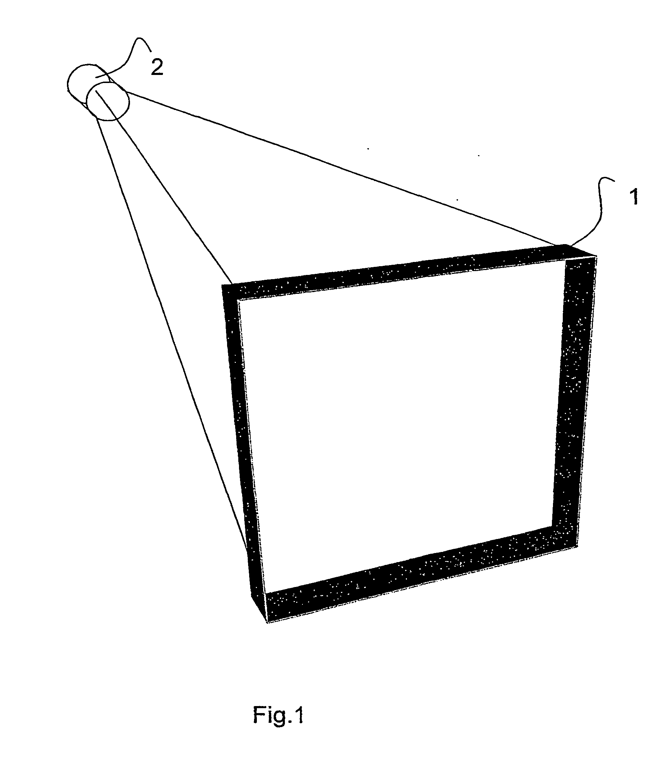

En se référant à la figure 1, un système de visualisation d'images sur un écran de rétroprojection 1 comprend, outre l'écran lui-même, au moins une source d'images (non représentée) et des moyens optiques pour générer l'image de cette source sur l'écran au travers d'au moins un objectif 2 ; le document US 3791712 décrit un système de ce type.

La source d'images peut être par exemple formée par la face avant d'un tube cathodique, ou par une matrice de valves électro-optiques formées par exemple de cellules de cristaux liquides, cette matrice étant alors combinée à une source de lumière.

Dans le cas d'un projecteur à LASER, le système de visualisation d'images sur un écran de projection comprend une source de rayons laser, des moyens pour moduler l'intensité d'émission de cette source, et des moyens pour obtenir un balayage complet du rayon modulé provenant de cette source sur la surface de l'écran ; les moyens de balayage peuvent être basés sur des miroirs tournants comme décrit dans le document US6020937.

Chaque point élémentaire de l'image formée sur l'écran correspond donc par exemple à un élément de la matrice de cellules de cristaux liquides ou à l'impact du rayon laser à un instant de balayage et de modulation.

Pour obtenir des systèmes de visualisation d'images plus compact, on dispose généralement des miroirs sur le chemin optique compris entre l'objectif 2 ou la source laser et l'écran ; la figure 1 du document US 4512631 décrit un tel système compact ; selon d'autres variantes, ces miroirs peuvent être remplacés par des composants holographiques ayant la même fonction.

Enfin, pour la visualisation d'images en couleur, ces systèmes peuvent comporter autant de sources d'image que de couleurs primaires, disposées de manière à superposer des images de couleurs primaires différentes sur le même écran 1.

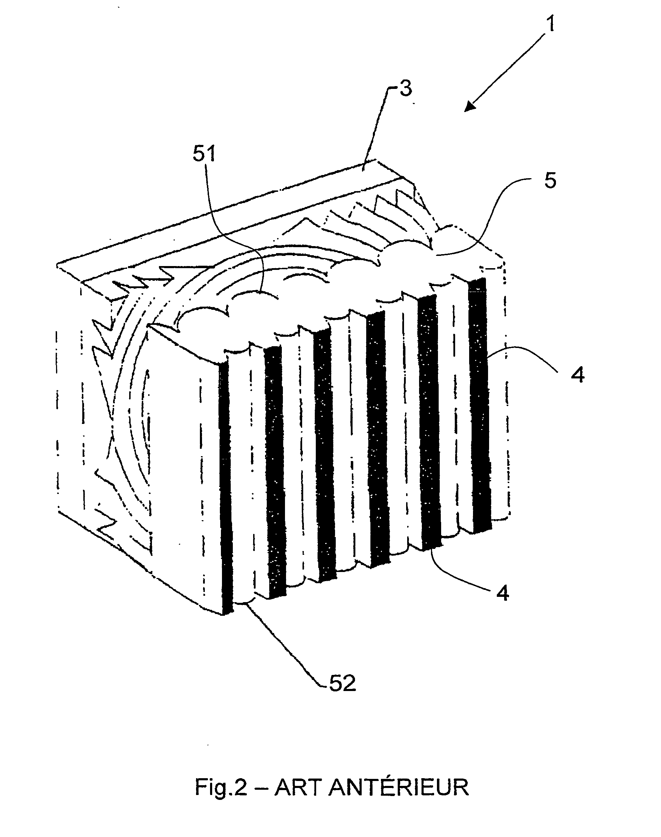

En référence à la figure 2, l'écran de rétroprojection d'images 1 comprend, à l'arrière, des moyens pour macro-collimater les rayons provenant de l'objectif 2 ou d'une source laser, et, à l'avant, des moyens pour améliorer le contraste de visualisation en lumière ambiante.

On entend par moyens de macro-collimation des moyens optiques adaptés pour diriger les rayons provenant de l'objectif 2 ou d'une source laser approximativement dans la même direction perpendiculaire au plan de l'écran ; ainsi, lorsque l'axe optique de l'enveloppe des rayons arrivant sur l'écran est perpendiculaire à cet écran (angle d'incidence nul), ces moyens sont généralement formés par une lentille de Fresnel 3.

Les moyens pour améliorer le contraste sont généralement formés par un réseau de bandes noires 4, comme représenté à la figure 2.

Entre la lentille de Fresnel 3 et ce réseau de bandes noires 4, on dispose généralement des moyens de micro-focalisation des rayons parallèles provenant de cette lentille 3, adaptés à la fois pour faire passer la majeure partie du flux lumineux entre les bandes noires 4 et pour orienter la lumière en direction de l'assistance susceptible d'observer les images à visualiser ; cette disposition permet, en combinaison avec les bandes noires, d'augmenter le contraste en minimisant la surface émissive de l'écran et assure une fonction de diffusion de la lumière ; ces moyens de micro-focalisation sont généralement formés par un feuille lenticulaire 5, comme représenté à la figure 2, comportant ici à la fois des micro-lentilles 51 sur la face arrière et des micro-lentilles 52 sur la face avant disposées entre les bandes 4 du réseau noir.

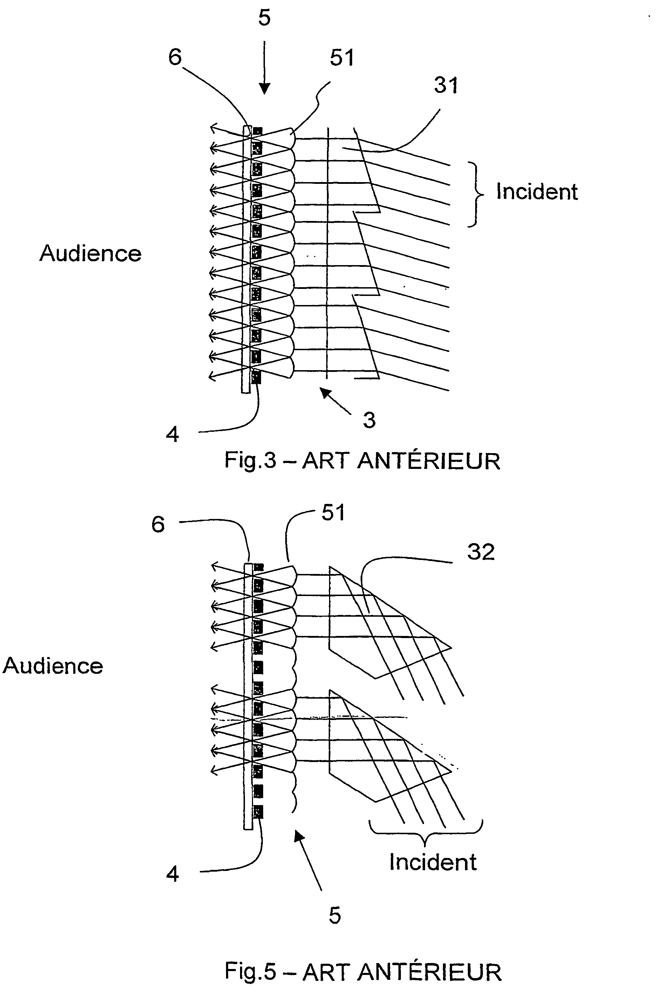

La figure 3 représente schématiquement une coupe transversale partielle de l'écran de la figure 2 : les rayons incidents provenant d'un objectif ou d'une source laser (non représentés) sont déviés par réfraction au travers de chaque élément prismatique 31 de la lentille de Fresnel 3 en un faisceau de rayons parallèles tous orthogonaux à l'écran ; puis chaque micro-lentille 51 de la feuille lenticulaire 5 fait converger les rayons parallèles qu'il reçoit entre les bandes 4 du réseau noir.

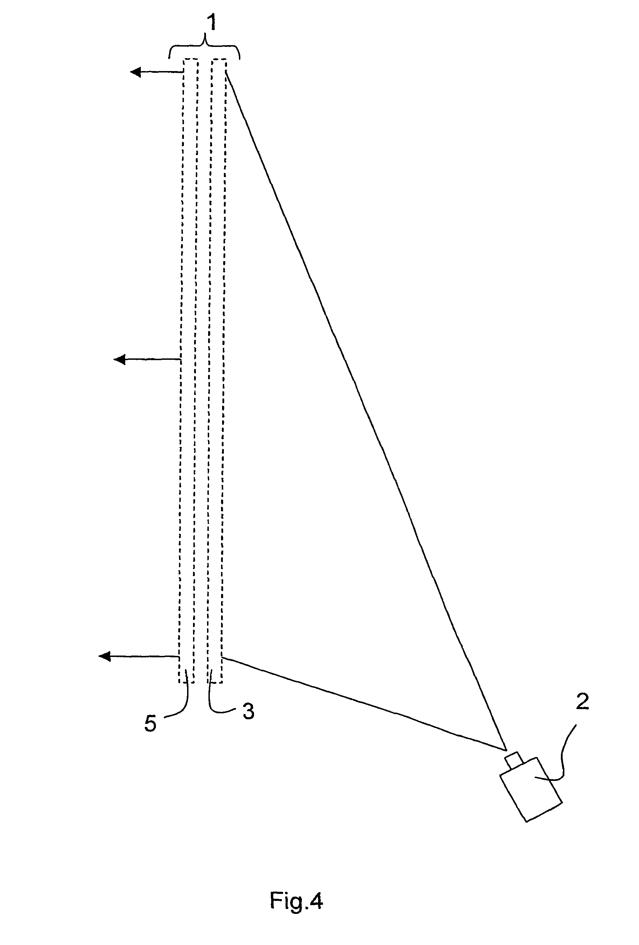

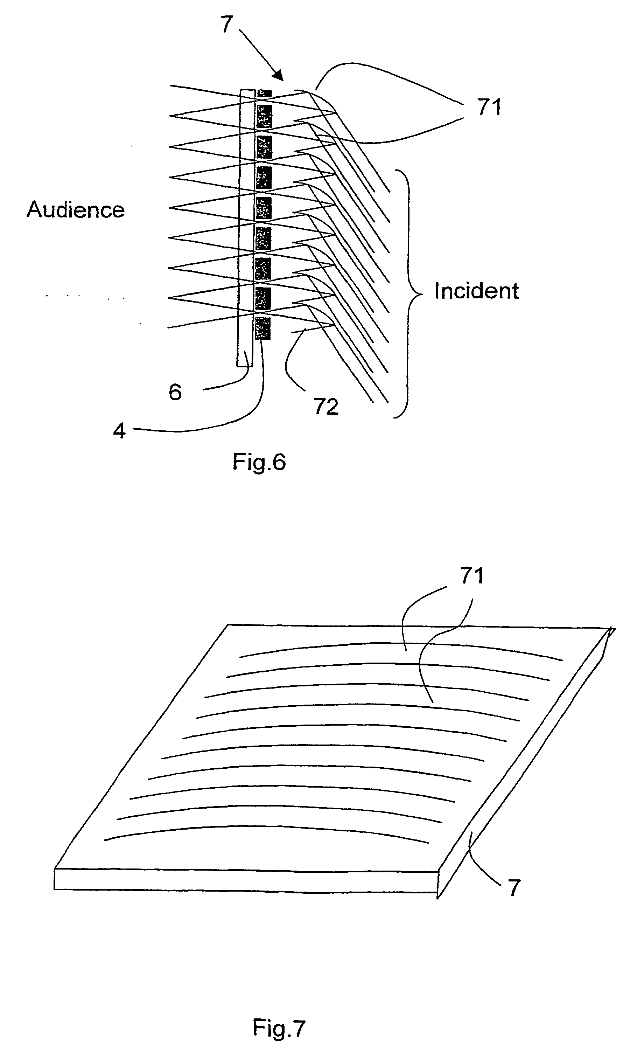

Dans le cas où l'angle d'incidence sur l'écran 1 des rayons provenant de l'objectif 2 ou de la source laser est très élevé, c'est à dire très écarté de la normale à l'écran comme représenté à la figure 4, les moyens de macro-collimation peuvent être formés par des éléments prismatiques fonctionnant par réflexion, comme décrit dans le document US 4003080 (voir notamment les figures 3 et 4 de ce document) ; la figure 5 jointe ici est une coupe partielle de l'écran 1 doté de tels moyens de macro-collimation formés d'éléments prismatiques 32, fonctionnant par réflexion totale ou par réflexion sur une surface métallique.

Des autres écrans de rectroprojection sont divulgués par US-A-4 531 812.

Quelle que soit la configuration, les écrans de rétroprojection comprennent donc d'une part des moyens de macro-collimation 2 généralement formés d'éléments prismatiques 31 ; 32 et d'autre part des moyens de micro-focalisation 5 généralement formés de micro-lentilles 51, 52.

De tels écrans sont donc coûteux à réaliser, non seulement parce qu'ils comprennent deux composants optiques distincts, à fabriquer séparément, par exemple une lentille de Fresnel d'une part et une feuille lenticulaire d'autre part, mais également parce que ces deux éléments distincts doivent être assemblés et alignés avec précision ; ces multiples étapes de fabrication et d'assemblage sont économiquement pénalisantes.

L'invention a pour but de remédier à cet inconvénient

A cet effet, l'invention a pour objet un système de rétroprojection selon la rev. 1.

Puisque les mêmes éléments permettent à la fois de macro-collimater et de micro-focaliser, au lieu d'utiliser comme dans l'art antérieur d'une part une lentille de Fresnel pour macro-collimater, d'autre part une feuille lenticulaire pour micro-focaliser, on utilise un seul composant optique pour réaliser les deux fonctions à la fois, ce qui apporte un avantage économique important.

Comme on utilise un seul dioptre, la même surface assure les fonctions auparavant apportées par deux composants optiques distincts ; comme tous les éléments optiques de l'écran relatifs aux fonctions de macro-collimation et de micro-focalisation sont répartis sur une même surface selon l'invention, l'écran selon l'invention peut être réalisé par des méthodes conventionnelles, telles que celles qu'on utilise pour fabriquer des lentilles de Fresnel ou des feuilles lenticulaires, comme par exemple le moulage par injection ou le pressage-moulage ; les écrans selon l'invention sont donc particulièrement économiques à fabriquer.

Comme les éléments répartis sur un seul et même dioptre procèdent par réflexion, l'écran selon l'invention est particulièrement bien adapté aux incidences de projection très obliques et permet d'obtenir un dispositif de projection très compact même sans utiliser de miroirs ; ainsi, l'angle d'incidence de l'axe optique de l'enveloppe des rayons incidents avec le plan de l'écran peut être facilement supérieur ou égal à 70°.

De préférence, ladite réflexion est une réflexion totale, par opposition à une réflexion spéculaire sur une surface métallique.

Selon une variante de l'invention, outre les éléments optiques déjà cités relatifs aux fonctions de macro-collimation et de micro-focalisation, ledit dioptre comprend des éléments qui participent par réfraction à la fonction de collimation et/ou de focalisation.

De préférence, ce dioptre correspond à la face arrière d'un composant optique principal dudit écran.

L'écran selon l'invention est utilisable dans n'importe quel système de visualisation d'images par rétroprojection, notamment dans les systèmes comprenant au moins une source laser.

L'invention sera mieux comprise à la lecture de la description qui va suivre, donnée à titre d'exemple non limitatif, et en référence aux figures annexées sur lesquelles :
- les figures 1 et 4 sont des schémas simplifiés de dispositifs de visualisation par rétroprojection ;
- la figure 2 est une vue en perspective d'un écran selon l'art antérieur du dispositif de la figure 1 ;
- la figure 3 est une coupe schématique partielle de l'écran de la figure 2 ;
- la figure 5 est une coupe schématique partielle d'un écran selon l'art antérieur du dispositif de la figure 4 ;
- la figure 6 est une couche schématique partielle d'un écran selon un mode de réalisation de l'invention ;
- la figure 7 est une vue de perspective arrière du composant optique principal 7 de l'écran de la figure 6.

Afin de simplifier la description et de faire apparaître les différences et avantages que présente l'invention par rapport à l'état antérieur de la technique, on utilise des références identiques pour les éléments qui assurent les mêmes fonctions.

Les rayons incidents dans le champ duquel l'écran selon l'invention est placé proviennent par exemple d'un objectif de projection ou d'une source laser, non représentés.

En se référant à la figure 6 qui représente une coupe partielle d'un mode de réalisation de l'écran selon l'invention qui comporte ici sur sa face avant un réseau de bandes noires 4 de contraste, une succession d'éléments de dioptre 71 répartis sur une même surface ou dioptre oriente par réflexion les rayons du faisceau incident (ou enveloppe des rayons) dans une direction qui est généralement centrée autour de la normale à l'écran et focalise des portions de ce faisceau de manière à faire passer les rayons entre les bandes 4 du réseau noir de l'écran et à les orienter en direction de l'assistance susceptible d'observer les images visualisées sur l'écran ; au regard de chaque intervalle entre les bandes noires 4, se trouve ainsi un élément de dioptre 71 qui assure, au moins partiellement, à la fois les deux fonctions de collimation et de focalisation ; comme représenté à la figure 6, pour macro-collimater et micro-focaliser l'ensemble du faisceau incident, on dispose côte à côte une succession d'éléments de dioptres 71 reliés par d'autres éléments de surface 72, de sorte que l'ensemble des éléments 71, 72 forme la surface arrière de l'écran selon l'invention ; les éléments de surface 72 sont ici plans et orientés de manière orthogonale à la direction des rayons incidents, de manière à ne pas dévier la direction de propagation de ces rayons ; ainsi, l'écran de rétroprojection n'est formé que d'un seul composant optique principal 7, dont la face arrière correspond à un seul dioptre rassemblant les éléments 71, 72 et dont la face avant porte ici le réseau de bandes noires 4 ; selon une variante de l'invention, ce composant optique principal 7 peut comporter des éléments lenticulaires entre les bandes noires, analogues aux éléments 52 de la figure 2.

Le composant optique 7 de l'écran selon l'invention peut être réalisé par des méthodes conventionnelles, telles que celles qu'on utilise pour fabriquer des lentilles de Fresnel ou des feuilles lenticulaires, comme par exemple par moulage par injection ou par pressage-moulage; les écrans selon l'invention sont donc particulièrement économiques à fabriquer, puisque les fonctions antérieurement assurées par deux composants distincts à fabriquer séparément puis à assembler sont maintenant assurées par un seul composant.

Comme représenté à la figure 6, comme les éléments de dioptre 71 agissent par réflexion, l'angle d'incidence des rayons lumineux dans le champ duquel l'écran est placé est très élevé, c'est à dire est très écarté de la normale à l'écran.

Selon une variante de l'invention qui n'est pas décrite ici en détail, les éléments de surface 72 participent aussi par réfraction à la fonction de collimation et/ou de focalisation ; par exemple, ces éléments, toujours plans, ne sont plus disposés orthogonalement à la direction des rayons incidents ; par exemple, ces éléments ne sont plus plans et ont une forme adaptée pour participer à la fonction de collimation et/ou de focalisation ; selon cette variante, le dioptre formé par la face arrière du composant optique principal 7 de l'écran 1 procède alors par réfraction au niveau des éléments de surface 72 et par réflexion au niveau des éléments de surface 71.

Avantageusement, le dioptre formé par la face arrière du composant optique principal 7 de l'écran 1 assure intégralement à la fois les fonctions de collimation et de focalisation.

On voit donc que l'écran selon l'invention est particulièrement bien adapté aux cas où l'angle d'incidence de l'axe optique de l'enveloppe des rayons projetés sur le plan de l'écran est supérieur ou égal à 70°.

La figure 7 illustre schématiquement la disposition en arc de cercle des éléments de dioptre 71, adaptée pour que l'angle d'incidence des rayons frappant le même élément de dioptre soit constant sur toute la largeur de l'écran ; une telle disposition est également décrite à la figure 7 du document US 4674836 dans le cas d'écrans classiques; de préférence, les bandes noires sur l'autre face du composant optique 7 présentent la même forme d'arc de cercle de manière à être disposées entre chaque élément de dioptre sur toute la largeur de l'écran.

L'écran selon l'invention peut être avantageusement utilisé dans tout système de visualisation ou d'affichage d'image par rétroprojection, notamment les systèmes très compacts ; il peut être notamment utilisé dans les projecteurs laser.

## Revendications

1. Système de visualisation d'images par rétroprojection comprenant un écran de rétroprojection (1), au moins une source d'images et des moyens optiques (2) pour générer l'image de cette source sur l'écran au travers d'au moins un objectif (2) générant une enveloppe de rayons lumineux de projection, ledit écran (1) étant disposé dans le champ de ladite enveloppe de rayons lumineux de projection,
**caracterisé en ce que**:
l'écran comprend:
- une succession d'éléments (71) de dioptre qui sont adaptés pour à la fois macro-collimater les rayons de ladite enveloppe dans la même direction perpendiculaire au plan de l'écran et micro-focaliser lesdits rayons sur la surface antérieure de l'écran,
- et des éléments plans (72) reliant entre eux lesdits éléments (71) de macro-colimation et de micro-focalisation de manière à former avec eux la surface arrière de l'écran, orientés de manière orthogonale à la direction de ladite enveloppe de rayons lumineux de projection,
lesdits éléments (71) procèdent par réflexion pour à la fois macro-collimater et micro-focaliser.

2. Système de visualisation d'images selon la revendication 1 **caratérisé en ce que** l'angle d'incidence de l'axe optique de ladite enveloppe sur le plan de l'écran est supérieur ou égal à 70°.

3. Système de visualisation d'images selon la revendication 1 ou 2 **caractérisé en ce que** les éléments de dioptre sont adaptés pour que l'angle d'incidence des rayons frappant le même élément de dioptre (71) est constant sur toute la largeur dudit écran.

4. Système de visualisation d'images selon l'une quelconque des revendications 1 à 3 **caractérisé en ce que** lesdits éléments de l'écran sont répartis en arc de cercle.

5. Système de visualisation d'images selon l'une quelconque des revendications 1 à 4 **caractérisé en ce que** ladite réflexion est une réflexion totale.

## Patentansprüche

1. System zur Anzeige von Bildern durch Rückprojektion mit einem Rückprojektionsbildschirm (1), mindestens einer Bilderquelle und optischen Mitteln (2) zur Erzeugung des Bildes dieser Quelle auf dem Bildschirm durch mindestens ein Objektiv (2), welches eine Hülle von Projektionslichtstrahlen erzeugt, wobei der genannte Bildschirm (1) in dem Feld der genannten Hülle von Projektionslichtstrahlen angeordnet ist, **dadurch gekennzeichnet, dass** der Bildschirm Folgendes aufweist:
- eine Reihe von Diopterelementen (71), welche für die Makro-Kollimation der Strahlen der genannten Hülle in derselben, senkrecht zur Bildschirmebene verlaufenden Richtung und die Mikro-Fokussierung der genannten Strahlen auf der vordere Oberfläche des Bildschirms zugleich geeignet sind, und
- ebene Elemente (72), welche die genannten Elemente (71) zur Makro-Kollimation und zur Mikro-Fokussierung derart miteinander verbinden, dass sie mit ihnen die hintere Oberfläche des Bildschirms bilden, welche orthogonal zur Richtung der genannten Hülle von Projektionslichtstrahlen ausgerichtet sind,
wobei die genannten Elemente (71) mittels Reflexion die gleichzeitige Makro-Kollimation und Mikrofokussierung bewirken.

2. System zur Anzeige von Bildern nach Anspruch 1, **dadurch gekennzeichnet, dass** der Einfallswinkel der optischen Achse der genannten Hülle auf der Bildschirmebene gleich oder größer als 70° ist.

3. System zur Anzeige von Bildern nach Anspruch 1 oder 2, **dadurch gekennzeichnet, dass** die Diopterelemente so gestaltet sind, dass der Einfallswinkel der dasselbe Diopterelement (71) treffenden Strahlen auf der gesamten Breite des genannten Bildschirms konstant ist.

4. System zur Anzeige von Bildern nach einem der Ansprüche 1 bis 3, **dadurch gekennzeichnet, dass** die genannten Bildschirmelemente kreisbogenförmig verteilt sind.

5. System zur Anzeige von Bildern nach einem der Ansprüche 1 bis 4, **dadurch gekennzeichnet, dass** es sich bei der genannten Reflexion um eine Totalreflexion handelt.

## Claims

1. Back-projection image display system comprising a back-projection screen (1), at least one source of images and optical means (2) for generating the image of that source on the screen by at least one lens (2) generating an envelope of projection light rays, the said screen (1) being placed in the field of the said envelope of projection light rays, **characterized in that** the screen comprises:
- a succession of dioptre elements (71) which are suitable both for macro-collimating the rays of the said envelope in the same direction perpendicular to the plane of the screen and microfocusing the said rays on the front surface of the screen,
- and flat elements (72) linking the said macro-collimation and microfocus elements (71) together in order to form with them the rear surface of the screen, oriented in a manner orthogonal to the direction of the said envelope of projection light rays,
the said elements (71) proceeding by reflection in order to both macro-collimate and microfocus.

2. Image display system according to Claim 1, **characterized in that** the angle of incidence of the optical axis of the said envelope on the plane of the screen is 70° or greater.

3. Image display system according to Claim 1 or 2, **characterized in that** the dioptre elements are adapted so that the angle of incidence of the rays striking the same dioptre element (71) is constant across the whole width of the said screen.

4. Image display system according to any one of Claims 1 to 3, **characterized in that** the said elements of the screen are distributed in an arc.

5. Image display system according to any one of Claims 1 to 4, **characterized in that** the said reflection is a total reflection.
